# EUROPEAN PATENT APPLICATION

(11) **EP 1 478 160 A1**
(43) Date of publication of application: **17.11.2004**
(21) Application number: 03291134.9
(22) Date of filing: 14.05.2003
(51) Int. Cl.: H04L 29/08

(54) **Brokering system architecture**

(71) Applicant: Hewlett-Packard Development Company, L.P., Houston, TX 77070 (US)
(72) Inventor: Celle, Benoît, 38240 Meylan (FR)
(74) Representative: Lloyd, Richard Graham

(57) **Abstract**

The invention relates to the management a plurality of distinct services invocable over a computer network. Further services may be added to the network and thus rendered invocable by a network client. The method preferably comprises associating each said service with a service description and an interface layer, the service description being intelligible to the network client and being used, in conjunction with the interface layer, to effect invocation of the service to the client. In a preferred embodiment, the service description describes the characteristics of the service and any related input/output constraints. The service description may advertise its presence to the client by way of a publish/subscribe mechanism. Preferably one or more service descriptions are conveyed to the client in response to a request dispatched to the interface layer. Preferably the service description comprises a declarative XML file. The interface layer may, where necessary, be operative in response to a request from the client, to convey to the client a service handle with which the client is able to obtain a client-specific service agent in order to effect invocation of a desired service. The system may be implemented using IR or wireless communication techniques and can be used in conjunction with service brokering systems in distributed network environments.

## Description

### Technical Field

The present invention relates to computer-based environments in which a user can interact with services in a transparent manner. More particularly, although not exclusively, the present invention relates to architecture and user interaction paradigms in which services have the appearance of being pervasive and are capable of invocation by a user in an intuitive and effective way.

The invention also relates to the software architectures, devices, interfaces and systems for the provision of networked services in the context of mobile user interaction, in particular, the invocation of network-based resources or services by means of mobile client devices.

### Background Art

The provision of services to mobile users has, to the present time, focussed generally on the specifics of communications and mobile hardware while preserving the familiar underlying paradigms of user interaction with applications and data. In the office environment, distributed or networked computing has generally focussed on the using known hardware and providing communication between mobile hardware, such as PDAs and laptops, and a fixed network. A simple example of such an approach can be seen in the use of a wirelessly networked notebook computer where connectivity may be provided by Bluetooth, Wi-Fi or similar.

This type of system provides mobile capability, however, it generally retains a network-like interaction paradigm in terms of how the network functionality is located and invoked. For example, files may be accessed wirelessly, downloaded and then displayed via a laptop connected to a local display device during a meeting or presentation. This approach is predicated on knowledge of the shared files location as well as the ability to physically deal with the required hardware ensuring compatibility between file formats and the display device. This type of technique merely transplants a user from a mobile context to a temporarily networked context so that the desired files can be accessed and displayed on an ad hoc basis. Such methods illustrate how the "fixed-wire" paradigm can be superimposed over the top of wireless systems to create a transient conventional network topology for the specific task that is to be performed.

Given the present and increasing pervasiveness of wireless communications and the enhanced hybridization and capability of mobile devices, the goal of the present invention is to provide an architecture and service framework which allows users to invoke services, using mobile devices, in a way which is intuitive, dynamic and, to a degree, transparent to the end user.

In this regard, the term "service" is understood to refer to a function (usually remote) 'exposed' by an entity (usually a computer or other electronic device) which is connected to a network and which may therefore be accessed by various devices and software components associated with the network. Services may thus include communication functionality, print/display facilities, storage devices, software elements and users themselves.

A "service framework" can be thought of as backbone infrastructure that supports connectivity, access to, and user interaction with remote or local services.

This definition includes within its scope: management of network resources; management of access to resources via identification and invocation of appropriate resources; and the development of paradigms for user interaction with such services. This last aspect will be extended to the development of novel user interfaces adapted for the service framework context described herein.

A distributed computing environment can arise from service provision over a network whereby computationally intensive functionality is advantageously located remotely from an end-users client application. In such a context it is a fundamental requirement that network clients be able to keep track of, or at least locate upon demand, services which are requested by entities immersed in the network. These entities may be users themselves requesting specific services, or other entities whose function depends on the result of a requested operation. In the following discussion, components, users, services and the like which may both constitute and interact with the network, will be referred to as 'entities'. This is intended to allow the abstraction of these components without necessarily considering any *a priori* considerations of function.

There are a number of protocols which have been developed to allow the identification of entities in a network having desired or useful characteristics. These may be classified as "look-up" techniques which rely on the use of directories of entities and their capabilities, and "discovery" techniques whereby entities proactively seek and identify other entities which have a specific capability or offer a desired service.

Lookup systems such as that articulated by the LDAP (Lightweight Directory Access Protocol), in which a broker maintains a directory of network services, are relatively powerful. However, they can also be computationally intensive at concentrated locations in the network and usually require significant maintenance. Lookup techniques also generally require strict compliance with a query language so that when a service directory parses a service query it is able to match the desired service with any suitable services which are available. When such a match is found, details of the service are returned to the client which invokes the service as appropriate. An example of a query and a returned response might be:
*LookupService(request) > service_handle_list*

While lookup techniques can be very powerful, they operate using a relatively low-level request model and it is necessary that the requesting network client have a detailed and pre-existing knowledge of the Service Description Standard or Interface Description Language (IDL). A further problem with such 'flat-filtering' systems is that the lookup technique may not provide a sufficient degree of dynamic configuration capability to allow for the rapid addition or removal of entities to and from the network.

Another method of determining service availability in a distributed computing environment is by means of Discovery Protocols. Such protocols operate by entities advertising their capabilities, for example by means of network multicasts, with their capabilities being cached by other entities on the network. A problem with these types of approach is that to operate transparently, the service brokering and provision needs to be platform and operating system independent, or at least be capable of recognising the particular context in which the service is to be invoked.

To date, one effort to overcome the problems existing in the prior art is in the form of the new service provision paradigm exemplified by the applicants Cooltown approach.

The Cooltown paradigm postulates an abstract framework in which an electronic world is divided into abstract entities denoting places, people and things. In this framework, a context is defined as *a person using things in a place.* Cooltown also introduced the idea of using a web presence to provide an electronic representation of real entities. These entities are referenced using a *url* which are gathered by a device implementing what is known as "E-squirt" technology.

The Cooltown web presence electronically exposes the characteristics of one or more entities along with a directory. The directory models the Cooltown inclusion relationship between entities. For example, if a place hosts a person and several devices such as a printer or a monitor, the corresponding web presence *urls* for these entities are registered in the place web presence directory

In practice this operates by means of the E-squirt technology in conjunction with a personal device such as a mobile phone or PDA to become a "universal remote" control for e-services delivered through the network devices.

For example, a user might receive an SMS message on his phone from friends on holiday. Part of the message might include a *url* for a website where the vacation pictures have just been posted. However, the image resolution and quality will be quite poor when viewed on a phone display, but if the user is near a color photo printer he or she can beam a reference (i.e. the *url)* from the phone to the printer using a short range connection such as infrared or Bluetooth. The printer transmits a user interface back to the phone as a WML page. From the user interface page the user selects '4x6 prints @ $0.99 each' and 'charge to my phone bill'. The printer then accesses the photos and prints them.

E-squirt also implements the ability to receive signals from Cooltown beacons. Cooltown beacons are small hardware devices whose function is to broadcast references (*urls*) wirelessly in specific locations.

For example, a beacon in a room might broadcast the *url* for the room's web presence which can trigger an interaction related to the web presence. For example, a beacon next to a painting might broadcast the *url* for the museum's web pages describing the provenance of that artwork.

In one variant, the Cooltown interaction model uses current web technology. That is, web presence entity descriptors use the XML description language to format information about entities. The information stored in an entity descriptor includes the entity type, a name, a homepage, an icon and a textual description.

Cooltown also proposes a device called a "Taggy". This is a small personal device the size of a key fob which simply acquires beacons and 'squirts' their transmitted data back out. In this way, the Taggy functions in a manner similar to a telecommunications repeater station. The user interface consists of a few buttons and LEDs and serves as an illustration of an extremely simple client that can be useful in a Cooltown application environment.

Cooltown does not however provide any way to expose services for programmatic access. Programmatic access is understood to correspond to knowing an API and the protocol by which it may be used, in a consistent manner. For example, software developers create applications that are able to talk to external components by having a programmatic knowledge of them. By way of example, a Windows driver is a way to expose programmatic access for a device to Windows applications.

In Cooltown it is the end-user that should capture this from the HTML presentation. Thus resource usage in Cooltown is not built for programmatic access but only directly for end user access.

For example, a printer must be used via an HTML dialogue from a home page. The present implementation also does not enable automatic brokering of services offered by a group of entities. Further, Cooltown is based on point-to-point human-driven dialogue and does not provide any way of mediating service offered by a group of entitities.

The present invention overcomes the limitations inherent in the Cooltown approach by providing a complete architecture which enables flexible appliance use by service exposure in a local environment while providing an innovative service framework for managing a space containing a plurality of electronic appliances.

It is therefore an object of the present invention to provide a system architecture, devices and methods of operation which allows the flexible use of preferably mobile devices in a local environment in a way which is intuitive, driven by the familiar semantics of mobile appliance usage and is flexible and easy to use.

### Disclosure of the Invention

In one aspect, the invention provides for a method of providing an interface between a user of an electronic device and a plurality of resources, characterised in that the method comprises procuring resource category and network location information relating to the resources and conveying the resource category information to the user in a manner whereby the resources are grouped together in accordance with their category.

The resources may include: network resources, which represent functional services; and input resources, which represent documents, input data or the similar, wherein all resource types may be represented by a corresponding network presence.

The method may further comprise the step of procuring resource description information relating to the resources and assessing the compatibility of the resources with specified criteria and filtering the resources category information such that information relating to non-compatible resources is not conveyed to the user.

Preferably, the specified criteria relate to user requirements including the users context and the characteristics of the electronic device.

Preferably each network resource has a network presence, distinct from the resource itself.

Preferably the network location information corresponds to the network presence of the resource.

At least some of the network presences may be arranged hierarchically, in that some resources are subordinate to, and hence accessible via, other network resources. The network presences may be *urls.*

At least some of the resource category, network location and resource description information may be communicated to the electronic device via a wireless link.

Preferably the wireless link is effective to communicate said information to local devices in such a way that the information conveyed to the user is representative of resources is relevant to the users locale.

The resource category information may be announced.

The electronic device may obtain the resource category information pursuant to: a resource discovery operation either triggered passively as a result of the electronic device moving into a locale where the resource description information is accessible; or triggered actively in response to a user action.

The electronic device is preferably operative to convey, to other network resources, information relating to its own capabilities and resources.

The resource category information, at least, is preferably conveyed graphically to the user, wherein the categories of network resources and input resources are display in demarcated areas of a display.

The user is preferably able to invoke or make use of a network resource by manipulating the graphical representation of the resource.

The display preferably includes one or more symbolic representations of said resources.

The suitability of the network resource in relation to an input resource may be articulated by constraining the graphical manipulative behaviour of the graphical representations of the resources.

The manipulative behaviour preferably corresponds to dragging and dropping input resource representations onto corresponding network resource representations whereby the constraints are expressed by limiting the movement of the graphical representations in relation to each other or changing a graphical or manipulative characteristic of the graphical representations of the resources in response to a specified manipulative action.

In a further aspect, the invention provides for a graphical user interface, illustrative of the network resources available to the user, and operative to display the resources in groups, in accordance with their category, the interface being operatively associated with a receiver, which, in use, is operative to receive, on a wireless basis, information relating to resources available in the vicinity of the user.

In a further aspect, the invention provides for a device adapted to incorporate the graphical user interface as hereinbefore defined.

### Brief Description of the Drawings

The present invention will now be described by way of example only and with reference to the drawings in which:
- Figure 1:: illustrates a simplified schematic representing a meeting location containing entities in the form of a display, two printers and a users mobile interface device (PDA);
- Figure 2:: illustrates an embodiment of an interface device and an embodiment of a user interface adapted for use with the invention;
- Figure 3:: schematically illustrates a prior art process of direct resource filtering;
- Figure 4:: schematically illustrates a process of resource interface matching on the basis of a request;
- Figure 5:: illustrates a schematic of a process whereby service handles are identified in relation to service descriptions;
- Figure 6:: illustrates a schematic view of a brokering process;
- Figure 87:: illustrates a schematic representation of a service;

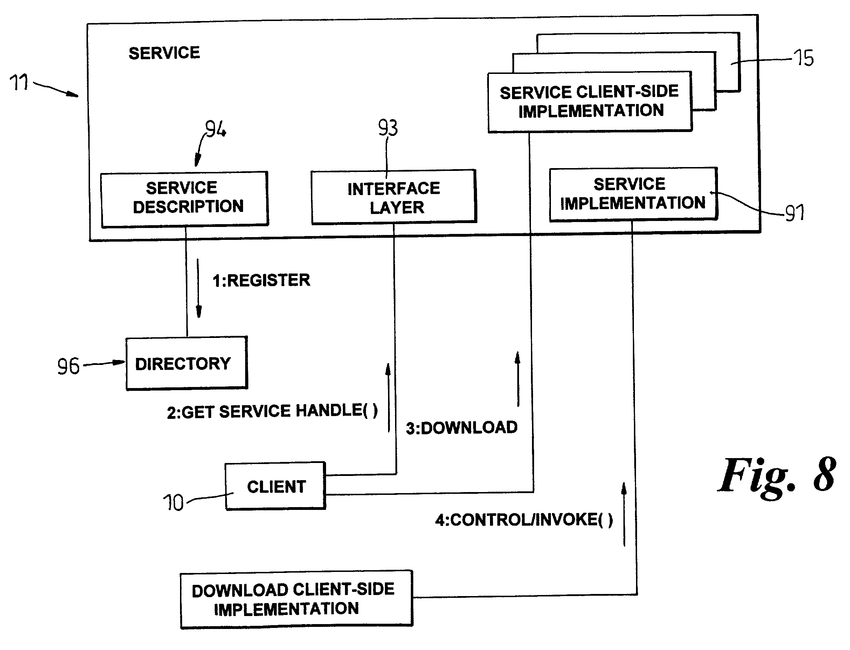

- Figure 8: illustrates a schematic overview of an implementation of a service management protocol.

### Best Mode for Carrying Out the Invention

The invention will be described according to four aspects: 1) the user environment; 2) devices for use in such an environment; 3) methods of matching services with requests (otherwise referred to as *brokering*); and 4) an embodiment of a software architecture which can be used to implement the invention as a whole.

In the following description, the idea of *service* is introduced and extended as representing the interaction model according to the Cooltown approach. A service in this context is a remote function offered by an entity. The entity itself is not necessarily a device. Software services can be attached to a place, a person or things that have a physical manifestation. An entity directory is used to monitor or record the services which are attached to entities. This allows the exposure of the entities actual capabilities in a highly flexible manner as the entity directory can be associated with a particular place, thereby reflecting the services which are exposed by the entities located in that space.

### 1. General User Environment

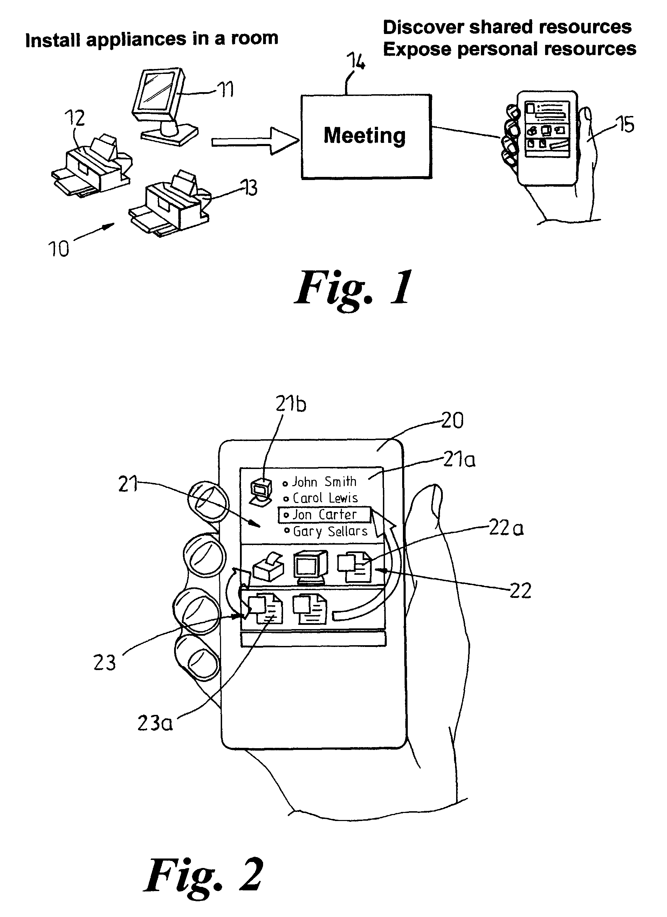

Figure 1 shows schematically a generalised embodiment that illustrates an overview of how the new interaction model may function in a simplified context. This scenario is based on the Cooltown paradigm in which people, places and things each have a web presence, accessible via a URL, and in which the web presences are communicated to other network entities using Cooltown Beacons that transmit network information via short-range infrared links.

In Figure 1, the local environment or "place" 14 is an office meeting room containing a video projector 11 and two printers 12 and 13. The video projector 11 is able to display GIF and JPEG images, show MPEG movies and play PowerPoint presentations. Both printers 12 and 13 are able to print text and Word documents. However, only one printer, 12, is able to print in colour. These entities capabilities are exposed via a web presence by transmitting infrared or other wireless signals into the physical space inhabited by the devices.

The web presences are detected by a mobile user 15 by means of a suitably configured personal device such as a PDA 20 (see figure 2). In the example shown, the PDA is a Hewlett Packard Jornada with wireless networking capability. This allows the device 20 to capture the associated entities web presences as well as expose the users own web presence to the environment to facilitate interaction with local devices and other users.

The end-user client device 20 provides interface functionality which allows the user to invoke any services which are exposed in the place. In the example shown this is done by requesting the relevant appliances to print or display documents.

Documents can be either user materials, information exposed by other users or documents "available" in the room. The notion of "availability" in this context means the exposure of public documents in the specified context. Soft copies of such documents need not be physically located or stored in the physical context. They may be located on a remote server.

Exposing and matching the available services to the users needs can be thought of as a process of the user "discovering" the shared resources in the room, "exposing" the users own shared resources and matching the users needs or "request" with any services which are available and suitable in the local environment. In this example, the user request might be to display or print a document.

Electronic devices such as the projector 11 and printers 12, 13 "expose" their capabilities in the conference room when they are physically installed. Similarly, when a mobile user 15 enters the meeting room 14, other attendees are exposed to him along with their relevant public documents and devices, by means of the web presences transmitted wirelessly by the entities in the room.

The administration of the exposure of private and public resources can be implemented by adding a security layer to the service brokering architecture. This will be discussed in more detail below.

The conference rooms web presence and the web presences of the associated entities are transmitted wirelessly using, for example, the applicants "E-squirt" technology, IrDA/802.11b or similar.

According to the Cooltown paradigm, web presences expose not only characteristics of the associated real entity, but also a directory component, or *place entity,* which models inter-entity relationships for that local environment. It does this by containing a list of the installed appliances and their interrelationships for the local environment. Thus, the place entity directory acts as a knowledge base for the local and a user who detects a place beacon is able to access this information through the place web presence directory. The place entity and the information held in the directory are logically distinct.. For example, in the scenario described above, the place web presence directory would contain data relating to the web presences of the printer and projector and the other participants in the meeting. In practice, for efficiency, the referenced entity is cached in the local descriptor data.

To facilitate web based information exchange, and to allow ready interpretation of the web presence information, the entities web presence descriptors may in a preferred embodiment use the XML to format entity information. An example of a web presence descriptor for an HP printer entity is as follows:

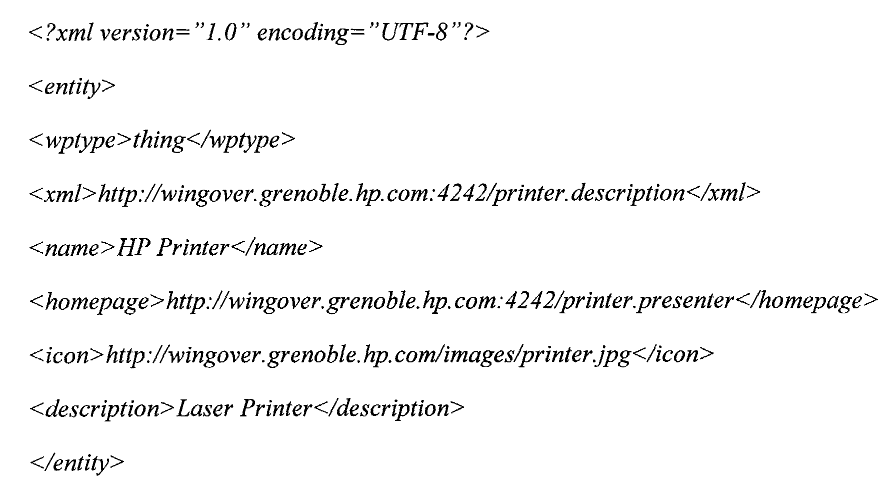

The information contained in the web presence descriptor includes the entity type ("thing"), a name field ("HLaser Printer"), a home page field, an icon and a textual description of the entity. The reference to the home page allows entity information to be web-based and accessible via a browser using the homepage location. This provides a method of dynamically collating and monitoring a set of abstract entities capabilities and interrelationships in order to affect service brokering.

Within this framework, an embodiment of a user interface and associated device is described as follows.

### 2. Devices and Interfaces for Representing the User Environment

The user 15 interacts with the environment 14 using a PDA 20 by means of a Graphical User Interface (GUI) which provides information about the available resources and other entities exposed in the environment. A device 20 running an embodiment such as the GUI is shown in Figure 2.

The GUI takes the form of a piece of client software known as a "PlaceWalker", which represents the mobile user 15 in the electronic environment. The user initially logs into the PlaceWalker using its personal web This sets the user profile in the context via a web presence which could be either a user web presence in the Intranet or a local representation of the user web presence on the users device (if not connected to Intranet)

The Place Walker is able to detect and 'capture' Cooltown beacons that are attached to places and thus graphically display the entities and/or services associated with the place in which the user is present. In the example shown in Figure 1, the entities are the printers 12, 13 projector 11, the user 15 and other participants in the meeting.

The people, document and service icons are generated locally in response to resource information derived from wireless beacon-to-beacon interaction or by the PDA 20 performing a discovery-like process to obtain resource and resource category information from the surrounding entities. In the embodiment shown the entities are categorised by placing them into one of three panes 21, 22, and 23 in the display, each of which contains a graphical representation of the resources that are identified with the corresponding category. Other or additional panes may be used depending on the number of anticipated resources and their classification.

This mechanism provides an intuitive and 'clean' interface that allows the user to rapidly assimilate the service and entity information relevant to his or her environment very rapidly.

Referring to Figure 2, the centre pane 22 is defined as a public pane and contains icons 22a representing the publicly available types of resources attached to the current place.

The available resource types are, from left to right, a print, a display service and a document. The functions of the hardware devices, in this example are self-evident. However, the PowerPoint document 22 may be thought of as an abstracted 'service' which is exposed in the meeting room in the form of an agenda, background slides or some other type of document which is relevant to the time and place and is to be made available to everyone exposed to the places web presence. It can thus be seen that the distinction between service and entity is not always evident and may be more of a matter of functionally based semantics.

The users private personal resources 23a attached to his web presence are shown in the lower pane 23 and are, left to right. a PowerPoint presentation and Word document.

The upper pane 21 displays the list of people the user is interested in. In this case, this is the list of participants involved in the meeting who are also exposed to the places web presence.
This interface provides an abstracted view of the users network environment with the content of the display being inherently dynamic in that people or entities entering the vicinity have their presences exposed by means of the Space Manager transmitting a notification of their presence to the PDA 20 Notification is transmitted to those entities that had previously subscribed to the Space Manager service. That is, when located in a place, a device running a GUI subscribes to the Space Manger for the purposes of receiving notifications of modification to entities and entity relationships in the space. In terms of passively joining a space, when another device joins the place it calls the SpaceManager.enter routine and the SpaceManager thereby notifies all the subscribers about change in the space.

The GUI is updated in real time thus depicting the resources and entities in the environment in a way which is easily understood.

Each pane may contain further subdivisions to reflect personal resources that the user might want to make public or alternatively only make available to a restricted subset of the users involved in the local context. For example, dropping a private icon 23 into the public pane 22 will expose this resource to others in the current locale. Other subdivisions might reflect differences in the function of individuals in the local environment. For example, a user listening to a presentation might wish to communicate with a specified other individual in the meeting. In this situation, the specified user can be identified by placing him or her in a unique pane and, once the need for distinguishing the user has finished, the user may be dragged back into the public pane.

The associations and actions relevant to the change in the users status would be automatically updated where relevant to reflect the change in their relationship with respect to the other users. The interface can thus be dynamically configured depending on the actions of all the participants in the local environment. Similarly, the exposure of new types of documents might invoke a suitable resource that would appear in the list of public resources and which could then be accessed by the participants.

Resources and services may be manipulated using GUI metaphors such as 'tap & hold' and 'drag & drop'. For example, if a user drags a document icon 23a over a "print" abstract service icon 22a this causes a querying interaction to occur between the network presences of the resources concerned via the broker. This operation involves a compatibility check to gauge whether the highlighted service is in fact able to interact with the specified document. To enable this, the web presence descriptors for the various network entities include information relating to the entities input and output constraints so that an appropriate algorithm can decide whether, and how, the interaction might take place.

In one implementation this matching between resources and services may be represented dynamically and the inability of the service to deal with a particular document may manifest itself as it being impossible to drop the document onto the desired resource if the resource is incompatible with the document. Thus, in one embodiment, if the user attempts to drop the document onto the resource, the GUI would be configured to translate the document to its original position on the screen display. In an alternative embodiment, when the document is dragged over the target service icon, the icon might not change or become highlighted if the service is incapable of accepting the document as input. If the service can accept the document as input, it could change its visual appearance to signal to the user that it can handle the request.

In yet another embodiment, the services, which cannot deal with the particular document type, may be temporarily masked or hidden when the user initially selects and drags the document onto the service. This would provide an immediate and intuitive indication of which resources are capable of accepting a particular incoming document.

Dropping an icon onto another triggers a query to the service broker to find a suitable service implementing the request. If there are multiple solutions to the request available, the PlaceWalker can query the user regarding his or her request formulation using dialogue boxes and pop-up menus for selection and refinement of the query.

This interface provides an intuitive and easily comprehensible way for a user to visualise and understand the entities in the users locale, the services which are available and how they can interact.

While the example has been described in the context the applicants Cooltown approach using on web presence URLs, this aspect may be applied to other network architectures and addressing protocols. Similarly, while the embodiment described uses Cooltown beacons, other methods of discovering network resources could also be employed.

### 3. Brokering Service Requests

There are two aspects of service request handling which are important in the context of the place web presence offering service brokering within the local environment. These aspects are represented by two functions, the Space Manager and the Service Broker.

The Space Manager is charged with building and maintaining the knowledge base, i.e.; the place web presence directory, to be consistent with movement of entities within the place and to provide asynchronous notifications. The Space Manager registers in the directory all of the services attached to a newly entering entity along with the entity description. That is, when entering a place the entity descriptor is added to the place directory, the entity directory scanned and then all of the services offered by the entity are added to the place directory. This means that when a device enters or leaves the place, all attached services in the locale are updated in a consistent manner. It is this attribute that provides the system with a high degree of dynamic adaptability.

The Service Broker provides a central mediation function with respect to all of the registered services within the immediate environment. The separation of these two functions in the overall architecture allows the service brokering function to operate on any web presence directory. In the scenario discussed above, the service offered by the printers and the video projector are reachable in the conference room once they have been registered by the Space Manager. Upon receiving the place beacon signal, any mobile device can decide whether or not it wants to expose its own capabilities in the advertised environment or restrict its interaction to only accessing the services exposed by the appliances.

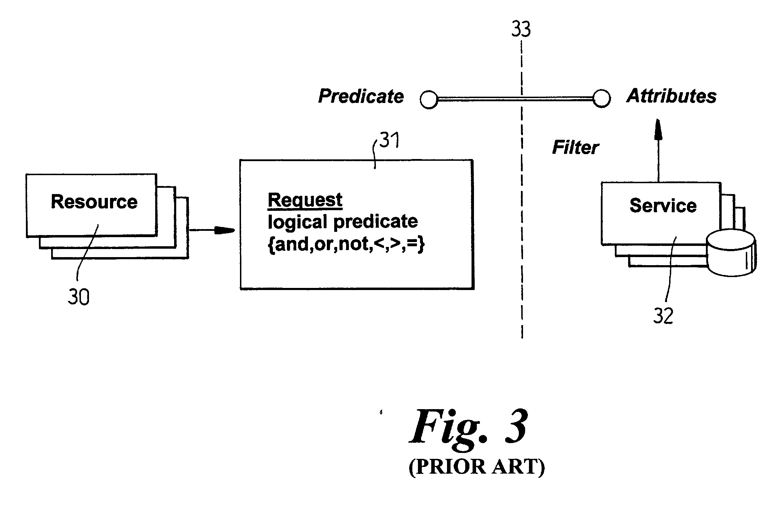

Figure 3 illustrates a prior art technique for service brokering. This schema is representative of technologies such as Jini, E-Speak and UpnP and is based on direct filtering. According to this method, services 32 are exposed using a set of standardised attributes that the broker operates on by filtering out unrelated functionality by means of a request 31 formulated by the user himself. The relevant services 32 are filtered, that is: matched to the resource 30 which is the subject of the request 31, by evaluating a logical predicate using {and, or, not, <, >, =} on the evaluated attributes of the service. This direct filtering approach for brokering is reasonably flexible but requires a relatively low-level request interface. The user has to build the request 31 from scratch reformatting the available knowledge in a standardized semantic structure. This makes client software complex and means that it must be adaptable to suit changes in service description standards.

The present invention adds substantial flexibility to this aspect of the service infrastructure by providing a new request model that relaxes the dependencies on service description language for the client. The result is a higher-level request model that focuses on the interaction between discoverable resources and interface matching.

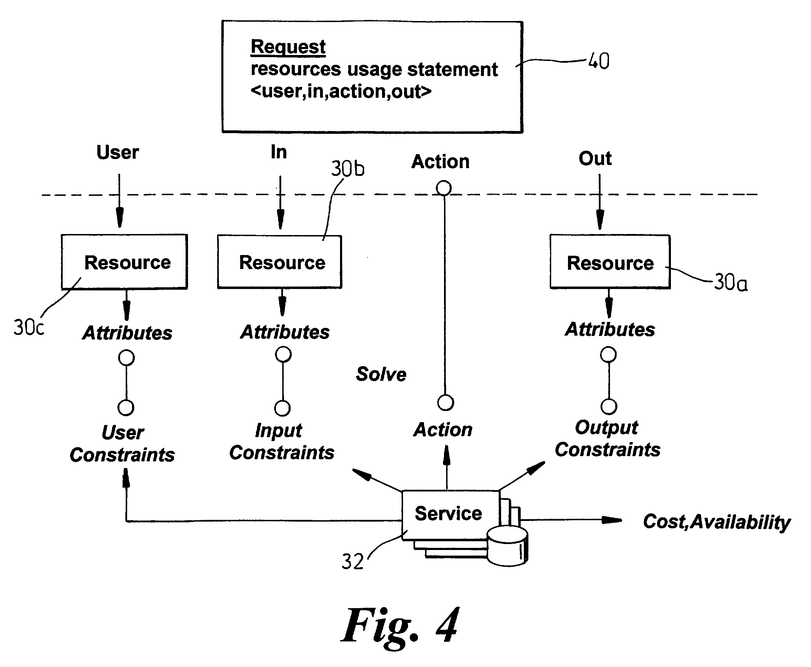

A schematic example of such a request model is shown in Figure 4.

This aspect of the invention operates by executing complex algorithms which attempt to solve constraints exposed by the service request 40 in terms which include various forms of interface compatibility. Resources 30a, 30b and 30c are described using web presence descriptors and expose services using additional descriptors attached to the web presence directory. The resource and the service descriptors include information about their interface allowing the broker to match the appropriate service 32 with the corresponding resource 30. The client does not need to extract resource information, such as document or device data, or manipulate any service description language, i.e.; content format, encoding etc. Rather the system expresses a statement in relation to existing resources using generic actions.

The generic action vocabulary is an important element in the present brokering model as it is used to represent the abstract services. The vocabulary represents the minimum knowledge that the user has to specify to characterize the kind of service that he or she needs. This vocabulary is attached to the exposed services and will be chosen so as to have a coherent lexical meaning to the user in the local environment. To this end, the broker could also associate an icon to this abstract service whereby both the icon and the keywords illustrates the nature of the service being offered.

Resource and service descriptors are created initially to describe the environment. The service broker then receives statements, i.e.; requests 40 that reference this data, and the broker outputs a notification as to whether there exists a service capable of fulfilling the request in that local environment. This request and response sequence can be articulated by means of the GUI shown in figure 1. Using this, the user is able to interact closely with his or her immediate environment using the GUI on a mobile device in order to invoke appliance functions in relation to resources which are appropriate and accessible in the local environment.

Thus this request model provides a high level mechanism for brokering requests based on several parameters which are used to describe the request.

Referring to Figure 4 again, the *action* part of the request 40 is used to indicate the generic function that the service 32 is to provide. Actions are based on simple keywords to model the vocabulary such as: print, display, store and convert. However, it is possible that a particular service ontology could be developed for specific technologies and applications. In any event, the vocabulary is predefined and is selected carefully to provide lexical clarity and meaning to the user.

The *user,* the *input* and the *output* parts are used to filter the relevant service 32 using a set of user, input and output constraints which are defined by the service 32 itself. The constraints operate on the resources characteristics in order to describe the service usage. The broker obtains the characteristics from the web presence descriptions directly which are referenced in the request, and performs a constraint validation on the selected services.

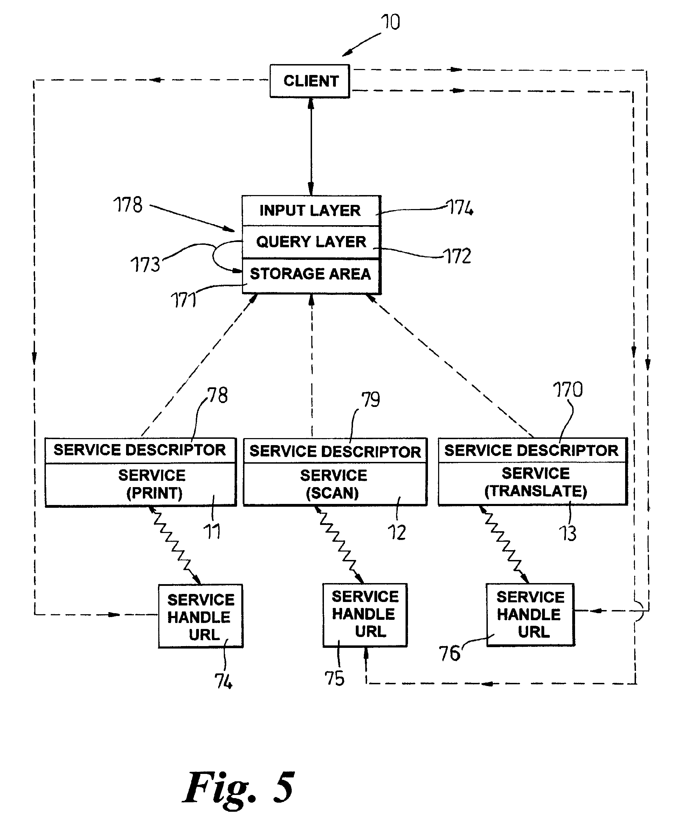

Figure 5 illustrates a more detailed illustration of a process by which a comparison of attributes can be performed. Here, a client 10 invokes one of a plurality of network available resources 11, 12 or 13. In this example, the resources correspond physically or functionally with a *print* service, a *scan* service and a *translate* service. The first two of these services are intimately linked to physical hardware-based devices and the latter to a software-based logical service. Each service is invocable by the client 10 using a command syntax which conforms to the HTTP. The services are thus provided with URLs or service handles 74, 75 and 76 which correspond to network locations where the services are invoked.

The architecture also includes a service broker 178 to which network entities expose their capabilities when they are introduced into the network environment. The network environment may or may not correspond directly with the physical or local environment as it is possible that a service offered locally may correspond only to the local manifestation of a service with the actual application (eg: translation) actually being executed at a remote location.

The service descriptors 78, 79 and 170 are passed in HTTP format, to a storage area 171 which is accessible to the broker 17. This acts as a service descriptor repository and can be queried 173 by the service broker query layer 172 in response to a service request issuing from a client 10.

The storage area 171 may comprise a layer of the broker architecture. However, in the preferred embodiment, it is envisaged that the service descriptors may be stored in conjunction with, or as a subset of, location information corresponding to the physical location of the services 11, 12 and 13. Thus where a physical location is provided with a web presence (URL), the abstract service descriptors may be located within, or in association with, that locations web presence. The service descriptors are expressed in common (unitary) XML format. This lends itself particularly well to HTTP communication and also allows the data fields to be readily identified on a user-defined basis. This facilitates interrogation of the storage area 171 by the query layer 172.

Transmission of the service descriptors 78, 79 and 170 to the storage area 171 may be done in a number of ways in accordance with the Cooltown paradigm. However, variations on this technique may contemplate an automated publication technique.

Each service descriptor 78, 79 and 170 contains in a corresponding XML field, a number of illustrative keywords that summarise the services concerned.

To identify which of the services 11, 12 and 13 are available to a specified network client 10, the broker 178 generates a high level request 173 using a simple GET command. This returns a list of abstract services and the sequence can be expressed in pseudo-code form as:

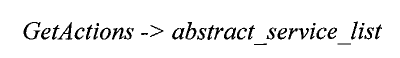

This procedure returns information about the types of services which are embedded in the local environment. The user can then select a type of action he or she desires. This can be done by dragging a document icon onto a printer icon (see Figure 2). The broker then filters on the action specifier to solve the constraint problem. Thus the query layer needs only to carry out a simple and computationally non-intensive query operation to determine which of the services 11, 12 or 13 are available to the client.

Profiles associated with the user of the client 10 and/or the physical location of the client may be taken into account when performing the discovery (retrieving the abstract service list). Thus, information concerning a users preferences, which may be stored at a network location (i.e. by means of a *url*) may be used, prior to the abstract service list being returned. Similarly, a client location *url* may be used to ensure that only abstract services located in the vicinity of the client device 10 are returned.

In pseudo-code form, this can be expressed as:

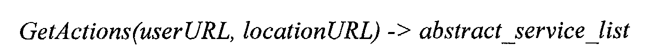

Whether or not the client 10 applies constraints by means of incorporated keywords and/or takes into account any profile information, the client 10 is provided with a discovery list of theoretically available services. This can be expressed in a more detailed form by the pseudocode:

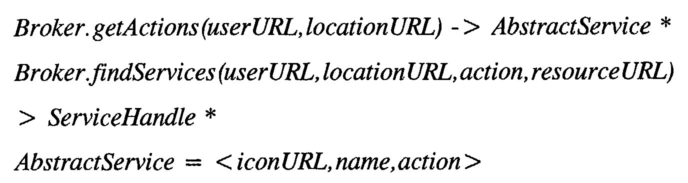

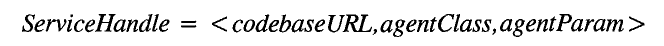

The action identified in the AbstractService record is used in the FindServices call which is invoked during the matching step in response to the user initiated request.

More specifically, in response to a user requesting a specific service, the broker establishes which of the identified available services is likely to be of use to the user. This will depend on the particular operation or function that the user has indicated that he wants to perform.

The service broker 178 carries out matching of the compatible services. It does this by filtering available services using the actions selection from the abstract theoretically available services, then by comparing attributes of the context with identified real service constraints. In this context, the syntax of the Find Services function can be expressed as:

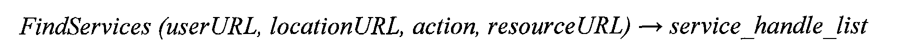

This request syntax serves to identify the attributes and constraints associated with the services that are to be matched in order for the client to properly invoke the service.

Information relating to the client 10 may also be significant in terms of ensuring basic compatibility between the client and service. An example of such compatibility might be the need for common file formats or at least the ability to reformat data for the purposes of interchange. Such compatibility may also include input and output constraint attributes of the available services to ensure that the client is able to communicate with the matched services.

In an alternative variation, the user may exercise some control over the availability check by providing service-based specifying information from the client to an input layer 24 functionally associated with the query layer 172. The query layer 172 may thus carry out the availability analysis using appropriate keywords such as "print", "scan", "convert" and the like. However, in a preferred embodiment, no constraining keywords are necessarily included within the request. This causes all services offered by the appliance in the local environment to be returned in the response.

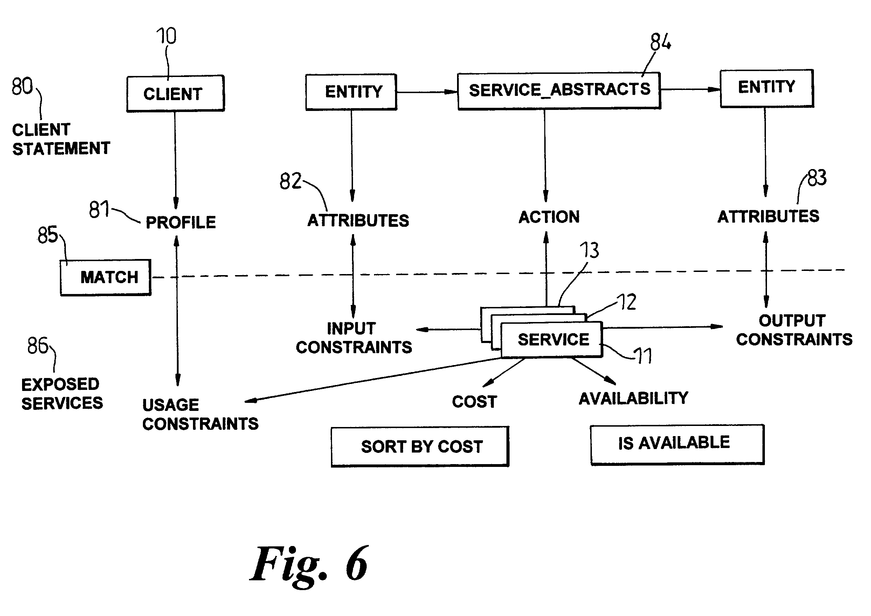

The execution of the matching algorithm employed in the second querying operation performed by the broker is shown in more detail in Figure 6. The client request statement 80 in this case includes client profile information 81, entity attributes 82 and 83 and specified service-abstracts 84 which identify the particular service types desired from the first set of services previously obtained.

The matching algorithm performs a comparison step 85 with the operating characteristics of the previously exposed services 86 and returns a "pass" response where a match is found.

The matching algorithm, executed by the broker may also be effective to filter the thus-revealed services on the basis of their actual availability by ascertaining whether the services are, for example, currently in use by other network entities. In addition, cost constraints may be taken into account (see Figure 6). That is, in the event of a plurality of identical services being found to be available, the cheapest service may be returned to the client. Alternatively, a selection may be returned ranked in cost order. To provide such cost-filtering functionality, the services would include "cost" fields in their service descriptors. In the particular example where the service is a print service for Hewlett Packard employees and the service accepts Word and Postscript documents, the service descriptor may expressed by:

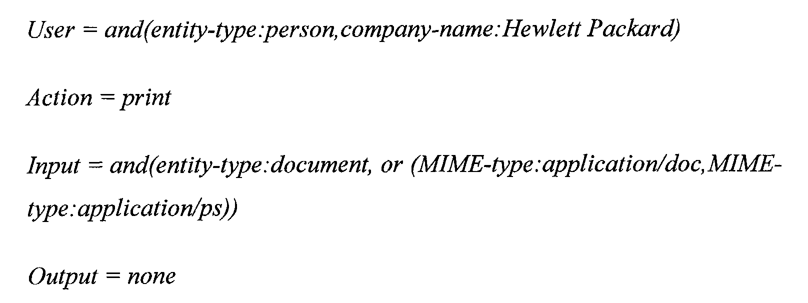

Considering the situation where the client is a scanner configured to produce pdf output, the "Find Services" function would indicate a specified "pdf" service input as the client is unable to provide input in any other format. So, in this in case, the comparison check performed by the query layer 173 would return a "fail" or "empty" response as none of the existing print services is able to able to handle pdf documents. However, where the input field of the print descriptor contains a "application/pdf" descriptor and the user, and output constraints were also found to match, the broker would return the service handle of the matched service, thus the client can invoke this service. In a specific embodiment, it may do this by downloading any required client-side functionality using the service handle record. A record identifies the location of the required application or functionality which would provide the desired service.

The aforementioned techniques for service brokering can now be explained in more detail and with reference to the exemplary environment shown in Figure 1.

In this example, two printers 12 and 13 are placed in a conference room, printer 12 is black and white and printer 13 is colour. It is specified that colour printing would only be offered where the incoming images are transparent GIF files whereby a chosen colour of the image is specified as "transparent". That is, the chosen colour is replaced with the web browsers background colour, regardless of what that colour may be.

In this example, colour printing is also only to be offered where the user requesting the printing was an employee of Hewlett Packard. No restrictions were placed on the use of the black and white printer.

Two services are thus attached to the colour printer 13 and one to the black and white printer 12. The first is a service constrained by the requirement that the input images be transparent GIF images. This is achieved by specifying as an attribute the relevant MIME-type. The second is a colour-only service created with a company-name attribute constraint. A single service is created for use in association with the black and white printer 12.

At a basic level, all three services thus expose a "print" action. Using the Cooltown architecture the *url* web presences of the two printers are attached (i.e.; linked or embedded within) the *url* web presence of the conference room itself.

Once a user is logged into an appropriate client 10, for example a suitably configured PDA, using their user profile *url,* the PDA is able to sense the *url* of the conference room by virtue of a Cooltown beacon located in the vicinity. As the service *url*s are associated with the location *url,* the client 10 is able to discover the types of services available in the current location. In pseudo-code form, this can be expressed as:
*Broker.getAction(userURL,roomURL)*

It is thus able to return a graphical representation of the available types of actions (i.e., the *abstract_service_list*) to the user by means of a GUI on the PDA.

If the user then wishes to use the returned abstract print service on a particular document, the user drags and drops the document icon onto the action (print) icon. This GUI action causes the broker to invoke the second matching step, identified above as the "find services" routine. In pseudo-code this can be expressed as:

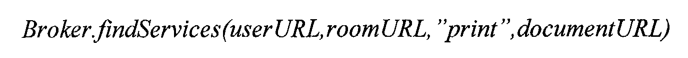

From the web presence *url* of a document that the user wishes to print, the broker is able to identify the attribute MIME-type for that document. Similarly, the broker is able to perform a comparison between the operating constraints of the print services and the entity invoking the action (i.e., the user).

In cases where the user *url* indicates that the user is an Hewlett Packard employee and the document *url* specifies that the document is in colour, the available print service would operate so as to print the document in colour and at no charge. This matching outcome would equally apply to any person having a transparent GIF file for printing. This can be contrasted with the scenario where a non-HP employee wished to print a colour document. This could be set to default to matching the black and white printing and no match would be found with the company-type attribute.

Although the example outlined above is relatively simple, the skilled person will appreciate that the invention, from the client perspective, provides a very lightweight approach to network service invocation in that the low-level querying and matching operations are performed by a third party broker with it being unnecessary for the client to become involved itself.

Further, developers wishing to introduce new services to the infrastructure need only ensure that the appropriately configured service descriptors are associated with principal service implementations whereby the intermediate broker may assimilate the new information and convey it to its clients in graphical form where appropriate. The web-based approach also provides a number of advantages in that the HTTP transmission is reliable and relatively fast with it being possible to allow clients to access the services using a personalised service agent obtained by a service handle *record* that is conveyed to the client by the HTTP.

### 4. Software Architecture

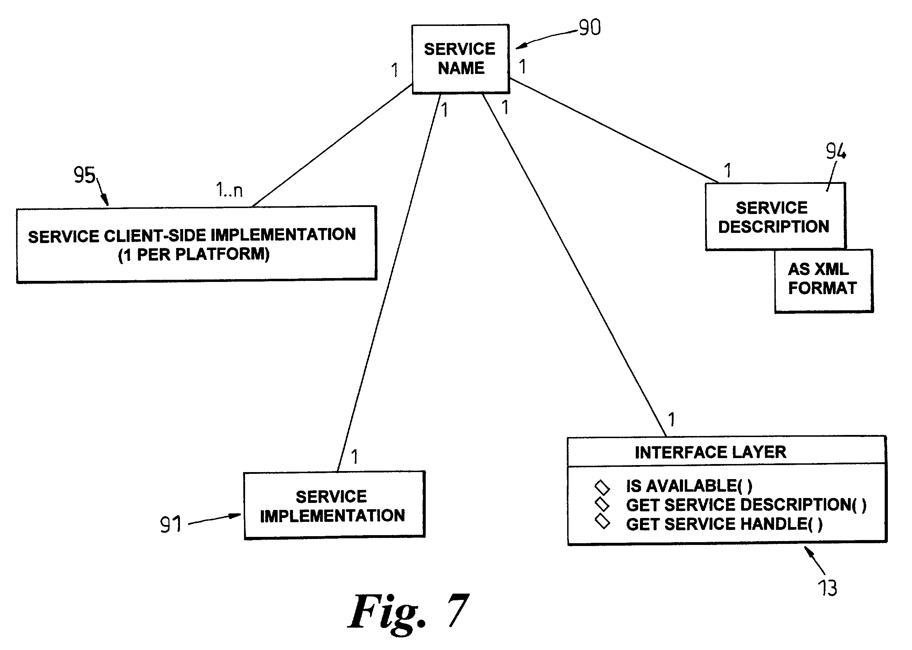

In a further aspect the invention is concerned with the management of the services which are to be brokered, or invoked, over the network. Referring to figure 7 a service is shown. Each service 90 in the architecture is made up of a principal service runtime implementation 91 which forms the core code that is executed when the service 90 is invoked by a client. As can be seen by reference to Figure 8, the relatively computationally intensive actions are located remotely from the client 10. This minimises the computational load on the client entity.

The service 90 is also associated with an Interface Layer 93, a Service Description 94 and a number (*n*) of Service Client-Side Implementations 95, to allow clients running on a range of different platforms to invoke the Service Implementation 91. As described above, the various services are referenced using *urls.* Referring again to Figure 7, the Service Description 94 corresponds to a XML file and is therefore able to be transmitted using the HTTP across IP-based infrastructures. The XML file may contain, in addition to the specification of the particular service 90, data representing any input/output constraints relating to the service. It is by means of this information that other entities are able to check their compatibility as described above to determine whether the service can offer the specified function to an entity.

The Interface Layer 93 allows clients 10 operating on a variety of different platforms to invoke the service 90 remotely using HTTP, by giving the client 10 (See Figure 8) access to the information that it needs to download and setup appropriate client-side implementation.

Specifically, in response to a "GET" request sent by the client 10, the Interface Layer 93 provides the client with a "ServiceHandle" which constitutes a record <codebaseURL,agentClass,agentParam> that directs the client to a specified *url* or other network location at which an appropriate, client-specific service agent can be obtained. In addition the interface layer 93 being associated with the Service Implementation 91 is also able to report to the client 10 on the availability of the service implementation in response to an availability request. Thus, as the service handle in effect functions as a pointer to a particular network location, the interface layer is computationally very light and need not therefore contain any of the client-side implementation code itself.

When the client 10 receives the service handle record the client 10 downloads from the specified network location the appropriate Client-Side Implementation 15, which then allows the client 10 to communicate with and invoke the Service Implementation 91. As the method is intended to allow multi-platform compatibility, a plurality of Client-Side Implementations 95 are provided, with each being accessed by different specific service handles obtainable from the Interface Layer 93.

From the end-users perspective, however, the transactions are transparent in that it appears that a one-step connection is effected between the client and the Service Implementation 91. Further, as the method provides for a download and setup of an appropriate client-specific Client-Side Implementation, the operative connection between the Client Side Implementation 95 and Service Implementation 91 may be legacy dependant. Thus providers of additional services need not be concerned with the operating protocol of the Service Implementation 91 itself. All that the provider needs to do is ensure that a compatible Client-Side Implementation 95 is included in the overall service 90 and that appropriate pointers are contained in the Interface Layer 93 to allow a range of clients 10 to obtain appropriate service handles and thus be able to locate corresponding specific Client Implementations 95. The service handle may also allow a particular Client-Side Implementation (service agent) to be configured in an appropriate manner in accordance with a particular client platform. The service handle may therefore include, in addition to the network location of the Client-Side Implementation, an identifying name which identifies the agent software and a set of parameters to configure the agent software in accordance with the client platform. It is envisaged that the service agent may be written in Java given that Java provides routines which may be embedded into web pages which can also execute in isolation. This ensures that no other aspects of the service software is affected.

In order for the service to be exposed to the client, the Service Description 94 is pushed to an external directory 96 using a known publish/subscribe mechanism with the service thus being registered in the directory. This may be automated by using wireless sensing techniques such as those described above in the context of the Cooltown approach.

Thus, entities announce their presences using infrared beacons which transmit *urls* to listening devices such as PDAs 20, with the Service Description announcing to a nearby PDA that a particular service is available locally.

From the description above, it will be seen that the invention provides a service framework embodying a software architecture which allows the effective addition of new services without the service provider having to take into account multiple versions of Service Implementation. This is due to the lightweight Interface Layer and client-side agents spreading the computational load and functionality across different points of the network. As described above in the context of the immersive characteristics of the users experience, any new services simply announce themselves by being detected by the users client device with the service handle/client-side implementation being invoked transparently.

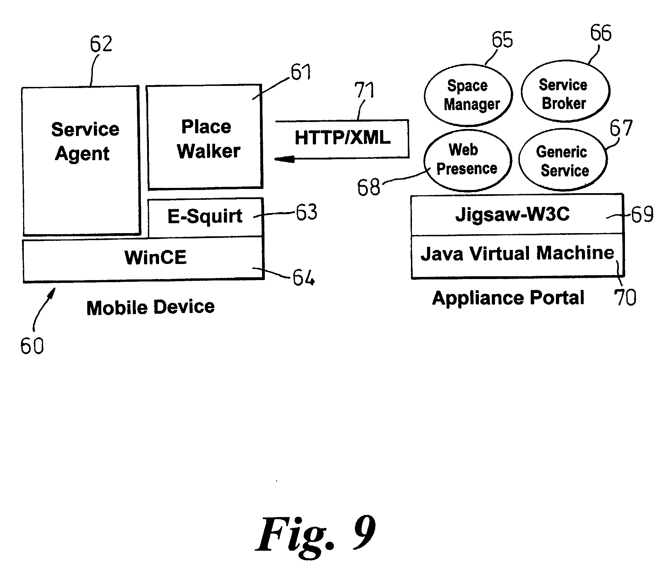

Figure 9 illustrates a schematic outline of a software architecture topology which the applicant has implemented as a prototype. In this embodiment, the mobile device (PDA) 60 runs the Place Walker 61 and all of the service agents 62. The Place Walker uses an E-squirt scanner 63 to detect entity beacons as described above. The system appliance portal components include the Space Manager 65, Service Broker 66, Web Presence 68 and a Generic Service 67 and are implemented as servlets running on a Cooltown portal where each is identified by means of a *url.* In the prototype, the front-end or portal runs the appliance WebPresence and all the attached services as Java servlets running on a JigSaw Web server. Simple remote procedure calls are implemented using the HTTP/1.1 transport protocol and XML.

The prototype was deployed in a form similar to that described above and illustrated in figure 1. A conference room with a video projector and several printers having the previously specified functionality was configured according to the invention and users allowed to interact with the entities present in the, albeit simple, context. Depending on the format of the document and the availability of the devices, the room service broker was able to automatically route any print or display request to the correct device.

The prototype demonstrated a high degree of context awareness and manipulation by reference on the users mobile devices. The users notion of a personal portal in the context of the office environment proved to be highly intuitive in terms of remotely controlling the diffusion of resources. In this case the resources were documents communicated using a computationally lightweight device such as a PDA which served as the bridge between the personal portal and the visited place in order to share information with others.

Given the detailed implementation structure of the invention, it is envisaged that the invention may be scaled to encompass vastly more complex and densely populated contexts. This capability is achieved by means of the advantageous features of the novel architecture and brokering system described herein.

Although the invention has been described by way of example and with reference to particular embodiments it is to be understood that modifications and/or improvements may be made without departing from the scope of the appended claims.

Where in the foregoing description reference has been made to integers or elements having known equivalents, then such equivalents are herein incorporated as if individually set forth.

## Claims

1. A method of managing a plurality of distinct services invocable over a computer network, whereby further services may be added to the network and thus rendered invocable by a network client, the method comprising associating each said service with a service description and an interface layer, the service description being intelligible to the network client and being used, in conjunction with the interface layer, to effect invocation of the service to the client.

2. A method according to claim 1 wherein the service description is operative to describe the nature of the service and any related input/output constraints.

3. A method according to claim 1 or claim 2 wherein the service description advertises its presence to the client by way of a publish/subscribe mechanism.

4. A method according to claim 1 or claim 2 wherein one or more service descriptions are conveyed to the client in response to a request dispatched to the interface layer.

5. A method according to any one of the preceding claims wherein the service description comprises a declarative XML file.

6. A method according to any one of the preceding claims wherein the interface layer is, where necessary, operative in response to a request from the client, to convey to the client a service handle with which the client is able to obtain a client-specific service agent in order to effect invocation of a desired service.

7. A method according to any one of the preceding claims wherein the interface layer is operative, in response to a request from the client, to convey availability information relating to the service.

8. A method according to claim 6 or claim 7 wherein the service handle and/or the availability information is conveyed using the HTTP.

9. A method according to claim 6 wherein the service agent is obtained using the HTTP.

10. A computer network configured to operate in accordance with any one of claims 1 to 9.
